# EUROPEAN PATENT APPLICATION

(11) **EP 1 277 556 A1**
(43) Date of publication of application: **22.01.2003**
(21) Application number: 01123740.1
(22) Date of filing: 04.10.2001
(51) Int. Cl.: B29C 45/16, B29C 37/00

(54) **Method for producing, by injection moulding, a plastic body provided with localized protuberances**

(30) Priority: 17.07.2001 IT MI011522
(71) Applicant: Progarden S.p.A., 23849 Rogeno, (Lecco) (IT)
(72) Inventor: Proserpio, Carlo, 22036 Erba, (Como) (IT)
(74) Representative: Ripamonti, Enrico, Dr. Ing.

(57) **Abstract**

Method for producing, by injection moulding, a plastic body (2) provided with localized protuberances (8), for example a garden furnishing article such as a table or chair, or a pot, consists of obtaining by injection moulding a first component (1) of said body (2) provided with localized fins (7), said component (1) having substantially the shape of said body (2) and presenting the fins (7) in positions corresponding with the desired protuberances (8) on said body, then overmoulding by injection moulding onto said first component (1) a second component (10) of said body (2) , which becomes fixed to the first (1) to hence define said body (2), said overmoulding covering the fins (7) and hence defining said body (2) provided with the required protuberances (8).

## Description

The present invention relates to a method for producing, by injection moulding, a plastic body provided with localized protuberances, in accordance with the introduction to the main claim.

Various methods are known for producing products with bodies presenting localized protuberances, such as plastic pots provided with an upper edge having a flange of curved cross-section. The said known methods enable products with such bodies to be obtained, however the costs of the equipment for implementing the method, its implementation and maintenance are very high.

An object of the present invention is to provide a method of the stated type which can be implemented at lower cost than similar known methods.

Another object is to provide a method of the stated type having a very low implementation time, so enabling high productivity per unit of time.

A further object is to provide a method of the stated type which enables plastic bodies with localized protuberances to be obtained having a high level of finish, said level of finish being maintained with time during large-scale production. These and further objects which will be apparent to the expert of the art are attained by a method in accordance with the accompanying claims.

The present invention will be more apparent from the accompanying drawing, which is provided by way of non-limiting example and in which:

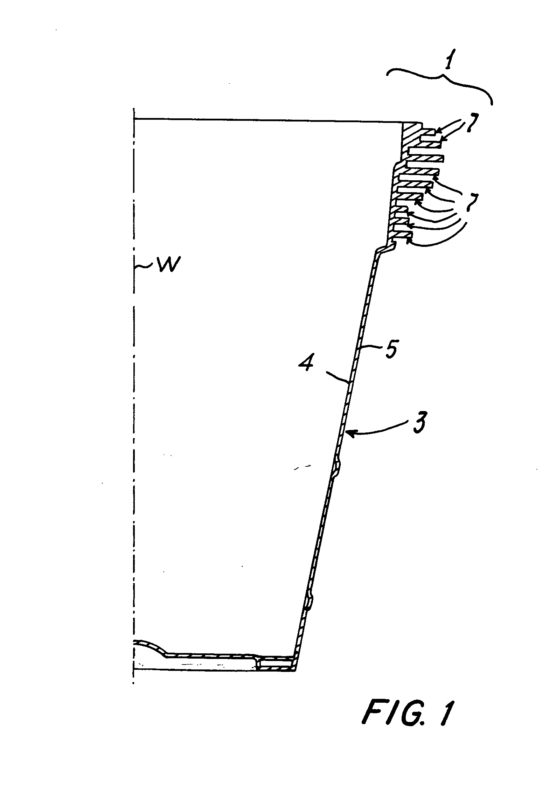

Figure 1 is a half cross-section through that obtained during a first stage of the method of the invention used to produce a plastic pot;

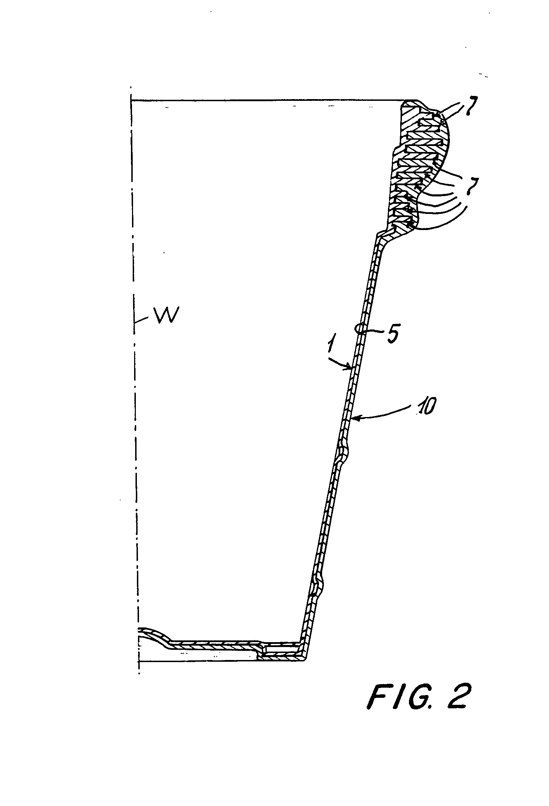

Figure 2 is a half cross-section through that obtained during a second stage of the method of the invention used to produce a plastic pot; and

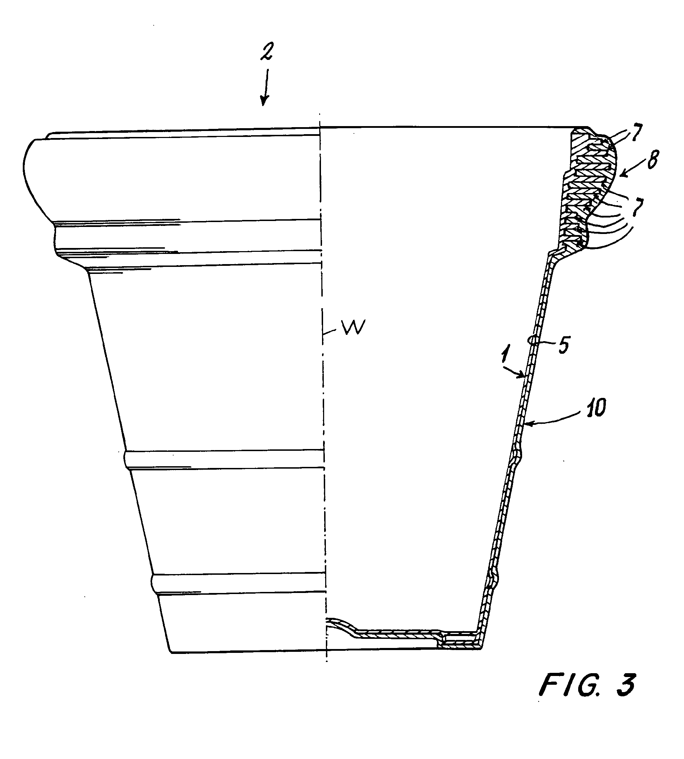

Figure 3 is a partly sectional front view of a pot obtained by the method of the invention.

With reference to said figures, the method of the invention comprises a first implementation stage in which a portion 1 of a body 2, namely a plastic pot in the example, is obtained by injection moulding. The portion 1, of plastic material, is obtained by usual injection moulding techniques in a mould having a suitable shape.

The portion 1 presents a structure 3 having an inner surface 4 and an outer surface 5. The outer surface 5 comprises a plurality of projecting fins 7 lying preferably perpendicular to a vertical longitudinal axis W of the portion 1. The fins are formed in positions corresponding with projecting protuberant parts 8 of the body 2, for example an end collar of the pot or any surface protuberance on this latter; their size, i.e. the distance of their end 7A from the surface 5, can be constant or variable (as in the example shown in the figures) as required by the protuberant part 8 of the body 2, which is formed over the fins during the second implementation stage of the method.

In this second stage, while preferably maintaining the portion 1 in the same mould, a second portion 10 of plastic material is overmoulded thereon. With this operation, the portion 1 is clad with the portion 2 to hence define the body 2 of the desired product (pot in the example). In injecting the plastic material onto the portion 1, this material covers the fins 7 and also penetrates between them, to define the protuberant part 8 of the corresponding body 2.

The body 2 obtained in this manner is left to cool and then extracted from the mould.

The time required to form the body 2 varies on the basis of its size. However, for equal size, a body 2 (for example a pot) is obtained in a much shorter time than that required to produce the same body 2 by known methods, for example 1/4 or 1/5 of the time. This results in greater productivity of the inventive method than of similar known methods.

The mould in which the method is implemented is preferably, but not necessarily, part of a known rotary table machine.

The materials used to obtain the first portion 1 and second portion 10 are thermoplastic materials such as a polyolefin polymer, ABS, nylon or the like. In particular, a material suitable for obtaining the portion 1 preferably contains a mineral filler (for example calcium carbonate) which advantageously enables the cooling time for the portion 1 to be reduced such as to enable the portion 10 to be quickly overmoulded onto it.

A method for obtaining a pot has been described. However, with the same method, injection moulding can be used to obtain any plastic product provided with localized protuberances, for example a garden furnishing product such as a table, a chair or the like. The product obtained by the method of the invention always comprises at least two portions obtained by injection moulding, in which the second is overmoulded onto the first and in which this latter comprises projections such as fins or the like in positions corresponding to the protuberant parts of the product.

## Claims

1. A method for producing, by injection moulding, a plastic body (2) provided with localized protuberances (8), for example a garden furnishing article such as a table or chair, or a pot, **characterised by** obtaining by injection moulding a first component (1) of said body (2) provided with localized fins (7), said component (1) having substantially the shape of said body (2) and presenting the fins (7) in positions corresponding with the desired protuberances (8) on said body, then overmoulding by injection moulding onto said first component (1) a second component (10) of said body (2), which becomes fixed to the first (1) to hence define said body (2), said overmoulding covering the fins (7) and hence defining said body (2) provided with the required protuberances (8).

2. A method as claimed in claim 1, **characterised in that** the overmoulding of the second component (10) is done after the first has cooled.

3. A method as claimed in claim 1, **characterised in that** the injection moulding of the first component (1) and the subsequent overmoulding of the second component (10) are done in the same mould without extracting the first component therefrom after it has been obtained.

4. A method as claimed in claim 1, **characterised in that** the first component (1) and the second component (10) of the body (2) are of thermoplastic material.

5. A method as claimed in claim 4, **characterised in that** the thermoplastic material of the first component also contains mineral fillers.

6. A mould for implementing the method claimed in claims 1-5, **characterised by** being part of a rotary table machine.

7. A plastic product comprising a body (2) provided with localized protuberances (8), said body comprising two superposed portions (1, 10) obtained by injection moulding, the more outer second portion (10) being superposed on the first (1), this latter comprising a plurality of projections (7) on its outer surface (5), to be covered by the second portion (10), these projections being situated in positions corresponding to each localized protuberance (8) on the body (2) of the product.
